# EUROPÄISCHE PATENTSCHRIFT

(11) **EP 2 789 889 B1**
(45) Veröffentlichungstag und Bekanntmachung des Hinweises auf die Patenterteilung: **02.08.2017**
(21) Anmeldenummer: 14155807.2
(22) Anmeldetag: 19.02.2014
(51) Int. Cl.: F04D 29/02, F04D 29/16, F16L 23/16, F04D 29/52, F04D 19/04, F04D 29/08

(54) **Vakuumsystem**
Vacuum system
Système à vide

(30) Priorität: 11.04.2013 DE 102013103650
(43) Veröffentlichungstag der Anmeldung: 15.10.2014
(73) Patentinhaber: Pfeiffer Vacuum GmbH, 35614 Aßlar (DE)
(72) Erfinder: Stoll, Tobias, 35644 Hohenahr (DE); Schweighöfer, Michael, 35641 Schöffengrund (DE); Watz, Robert, 35781 Weilburg (DE)
(74) Vertreter: Knefel, Cordula

(56) Entgegenhaltungen:
- EP-A2- 1 852 613
- DE-U1- 9 304 435
- GB-A- 2 504 329

## Beschreibung

Die Erfindung betrifft ein Vakuumsystem mit wenigstens einer Vakuumpumpe und wenigstens einem Rezipienten.

Aus dem Stand der Technik (DE 24 16 808 A1) ist ein Dichtungselement für Vakuumzwecke bekannt. Dieses Dichtungselement besteht aus Metall, da Dichtungselemente, die aus einem elastomeren Material bestehen, nicht hitzebeständig sind und deshalb bei hohen Temperaturen nicht einsetzbar sind. Insbesondere, wenn der Rezipient ausgeheizt wird, sind Elastomerdichtungen nicht einsetzbar, da diese Dichtungen ausgasen und damit das Vakuum "verunreinigen". Zusätzlich tritt bei Elastomerdichtungen häufig eine Permeation auf, das heißt, dass Gase durch die Elastomerdichtung hindurchwandern.

Die zum Stand der Technik gehörenden Metalldichtungen weisen den Nachteil auf, dass sie in der Regel nur einmal oder allenfalls einige Male verwendet werden können, da Metall den Vorteil der Elastomerdichtungen, nämlich den der elastischen Verformbarkeit, nicht aufweist. Nach jeder stärkeren Verformung muss deshalb ein neues Dichtungselement verwendet werden. Da die Metalldichtringe häufig aus kostspieligen Materialien (Kupfer, Indium, Gold oder dergleichen) bestehen, ist der Aufwand für Metalldichtungen relativ groß.

Gemäß dem Stand der Technik (DE 24 16 808 A1) ist deshalb vorgeschlagen, einen Dichtring aus Metall auszubilden und den Zentrierring als Federring mit einem Radialspalt. Auch diese Ausführungsform ist sehr aufwendig und damit sehr kostspielig.

Aus der Praxis sind UHV-Flansche bekannt (Ultrahochvakuum). Diese Flansche weisen Schneidkanten und beispielsweise Kupferdichtungen auf. Zwischen zwei Flansche wird ein Kupferring gelegt. Die konzentrisch umlaufenden Schneidkanten der Flansche dringen in das Kupfer ein und bilden eine metallische Abdichtung, die sich durch eine extrem niedrige Leck- und Permeationsrate sowie eine hohe Temperaturbeständigkeit auszeichnet. Diese Flansche werden auch Conflat^{®}-Flansche (eingetragene Marke der Agilent Technologies Inc., USA) oder CF-Flansche genannt. Auch diese Flansche weisen den Nachteil auf, dass sie mit Schneidkanten und Metalldichtungen arbeiten. Ein mehrmaliger Einsatz der Metalldichtungen ist wegen der dauerhaften Verformung derselben nach einem Einsatz nicht mehr möglich.

Zum Stand der Technik (DE 93 04 435 U1) gehört eine Hochvakuumpumpe mit einem Einlassflansch, bei der hochvakuumseitige Dichtstellen von Elastomerdichtungen gebildet werden. Diese Ausführungsform weist den Nachteil auf, dass Elastomerdichtungen einer Ausgasung unterliegen, wodurch eine Verunreinigung des Vakuums auftritt.

Weiterhin gehört zum Stand der Technik (EP 1 852 613 A2) eine Vakuumpumpe mit Gehäuse, bei der ebenfalls Elastomerdichtungen vorgesehen sind. Auch diese Vakuumpumpe kann hinsichtlich des Einsatzbereiches, bei dem der Rezipient ausgeheizt wird, verbessert werden. Das der Erfindung zugrunde liegende technische Problem besteht darin, ein Vakuumsystem anzugeben, bei dem insbesondere im Hochvakuumansaugbereich sehr niedrige Drücke dauerhaft erreicht werden unter Verwendung einer Elastomerdichtung.

Dieses technische Problem wird durch ein Vakuumsystem mit den Merkmalen gemäß Anspruch 1 gelöst.

Das erfindungsgemäße Vakuumsystem mit wenigstens einer Vakuumpumpe und wenigstens einem Rezipienten, bei dem zwischen der Vakuumpumpe und dem Rezipienten eine lösbare Verbindung vorgesehen ist, wobei zur Abdichtung der Verbindung zur Atmosphärenseite hin wenigstens eine Elastomerdichtung und in Richtung Vakuumseite wenigstens eine Spaltdichtung vorgesehen ist, bei dem zwischen der Elastomerdichtung und der Spaltdichtung wenigstens ein Absaugkanal und/oder wenigstens eine Absaugöffnung vorgesehen sind/ist, zeichnet sich dadurch aus, dass Flächen des Rezipienten (Kammer) und eine Fläche eines Pumpengehäuses aufeinander gedrückt sind.

An den Dichtstellen kommt auf der Atmosphärenseite wenigstens eine Elastomerdichtung zum Einsatz. Diese ist vorteilhaft als O-Ring ausgebildet. Zwischen der Elastomerdichtung und dem beispielsweise UHV-Port (Ultrahochvakuumanschluss) kommt als zweites Dichtelement wenigstens eine Spaltdichtung zum Einsatz. Die Flächen des Rezipienten (Kammer) und eine Fläche des Pumpengehäuses werden aufeinandergedrückt. Die Ebenheit und Oberflächengüte spielen dabei eine besondere Rolle. Der entstehende Spalt soll im Idealfall gegen Null gehen.

Zwischen Elastomerdichtung und Spaltdichtung entsteht aufgrund von Ausgasungs- und Diffusionsvorgängen eine Gaslast, die den Druck im UHV-Bereich anhebt. Diese Druckanhebung verhindert eventuell das dauerhafte Erreichen des Zieldruckes.

Um das zu verhindern, kommt zwischen Elastomer- und Spaltdichtung erfindungsgemäß eine Absaugung zum Einsatz. Damit diese effektiv genutzt werden kann, muss der Leitwert möglichst groß sein. Zur Realisierung großer Leitwerte ist vorteilhaft eine Freifräsung und/oder Freidrehung als Absaugkanal eingebracht. Dieser Kanal wird vorteilhaft mit einer Zwischenstufe höheren Druckes (bezogen auf den UHV-Bereich) verbunden. Nur durch eine effektive Absaugung ist gewährleistet, dass der UHV-Druck stabil bleibt. Je größer der Absaugkanal ausgeführt wird, um so kürzer wird platzbedingt die Spaltdichtung. Es kann daher sinnvoll sein, den Absaugkanal an mehreren Stellen zu evakuieren, um den Absaugkanal so in kurze Abschnitte mit guten Leitwerten aufzuteilen. Es kommt dann zum Beispiel ein zweiter Absaugkanal zur Absaugung zum Einsatz, der die Länge des Dichtspaltes nicht beeinflusst, da er auf einer anderen Ebene liegen kann.

Der Absaugkanal kann einen oder mehrere Ausgänge zum Evakuieren aufweisen. Ziel ist es, möglichst gute Leitwerte zu erreichen. Die Ausführung des Absaugkanals mit einem oder mehreren Ausgängen richtet sich nach der Optimierung der Leitwerte.

Das Prinzip der erfindungsgemäßen Abdichtung lässt sich sowohl bei rechteckigen wie auch runden Geometrien einsetzen. Gleichermaßen kann dieses Prinzip in der Ebene wie auch auf zylindrischen oder dreidimensionalen Strukturen eingesetzt werden.

Innerhalb der erfindungsgemäßen Dichtungskonfiguration kann ein oder es können mehrere Vakuumanschlüsse (Ports) angeordnet sein, die beispielsweise auch auf unterschiedlichem Druckniveau liegen können.

Die Absaugung zwischen der Elastomerdichtung und der Spaltdichtung kann in einen Vakuumanschluss innerhalb oder außerhalb der erfindungsgemäßen Dichtungskonfiguration führen.

Außerhalb der erfindungsgemäßen Dichtungskonfiguration können noch weitere Vakuumanschlüsse platziert werden.

Sämtliche Vakuumanschlüsse der Pumpe können auf einer Ebene liegen. Es ist aber auch eine Verteilung auf mehrere Ebenen möglich.

Das erfindungsgemäße Dichtungsprinzip lässt sich auf Flansche wie auf beliebige Anbauteile oder Einbauteile anwenden.

Die benötigten Konturen können im Gehäuse der Vakuumpumpe oder im Gegenstück untergebracht sein.

Die Absaugung kann sowohl innerhalb als auch außerhalb des Gehäuses vorgenommen werden. Die Absaugung kann außerhalb, zum Beispiel durch Schläuche oder Rohre durch die Kammer oder andere geeignete Anbauteile in eine Zwischenstufe geführt werden.

Das Dichtungsprinzip ist nicht auf den UHV-Vakuumanschluss und Anbauteile am Gehäuse beschränkt. Auch die Kammer, das heißt der Rezipient, kann an verschiedenen Stellen nach diesem Prinzip gedichtet werden. Die Absaugung kann dann auch wieder über Rohre innerhalb der Kammer oder auch innerhalb des Pumpengehäuses oder ähnlichem zu einer geeigneten Zwischenstufe geführt werden.

Anstelle eines Zwischenstufenanschlusses ist auch eine andere Drucksenke zur Absaugung denkbar. So kann zum Beispiel auch eine weitere Vakuumpumpe zum Einsatz kommen. Das kann zum Beispiel Sinn machen, wenn an einem Mehrkammersystem mehr als eine Pumpe zum Einsatz kommt.

Die Flansche wie auch das Pumpengehäuse können aus Edelstahl wie auch aus einem weicheren Metall, wie zum Beispiel Aluminium, bestehen. Die Flanschpartner und das Dichtungselement können bei der erfindungsgemäßen Ausführungsform mehrfach verwendet werden, was bei üblichen Schneidringdichtungen nicht der Fall ist.

Das erfindungsgemäße Vakuumsystem weist gegenüber dem Stand der Technik den Vorteil auf, dass beim Stand der Technik im UHV-Bereich Metalldichtungen eingesetzt werden. In der Regel werden diese in Verbindung mit Edelstahlgehäusen und -kammern eingesetzt. Die Metalldichtung besteht dann in der Regel aus einem weicheren Material, so dass die Dichtung durch ein Umformen der Metalldichtung am festeren Edelstahl entsteht. Diese Dichtungselemente sind im Gegensatz zu der erfindungsgemäßen Lösung in der Regel nur einmal zu verwenden.

Es werden große Presskräfte beim Stand der Technik benötigt, um die Verformung des Dichtelementes zu erreichen. Dies hat zur Folge, dass die Flansche eine Mindestfestigkeit und eine hohe Anzahl von Befestigungselementen aufweisen müssen. Das erfindungsgemäße Dichtungskonzept ermöglicht dagegen den Einsatz von filigranen Flanschgeometrien, da die Presskraft der Flanschpartner sehr viel geringer ist.

Weitere Merkmale und Vorteile der Erfindung ergeben sich anhand der zugehörigen Zeichnung, in der mehrere Ausführungsbeispiele eines erfindungsgemäßen Vakuumsystems nur beispielhaft dargestellt sind. In der Zeichnung zeigen:
- Fig. 1: eine Vakuumpumpe in perspektivischer Ansicht mit Vakuumanschluss;
- Fig. 2: einen Längsschnitt durch die Vakuumpumpe gemäß Fig. 1;
- Fig. 3: ein geändertes Ausführungsbeispiel in perspektivischer Ansicht;
- Fig. 4: einen Längsschnitt durch die Vakuumpumpe gemäß Fig. 3;
- Fig. 5: ein geändertes Ausführungsbeispiel in perspektivischer Ansicht.

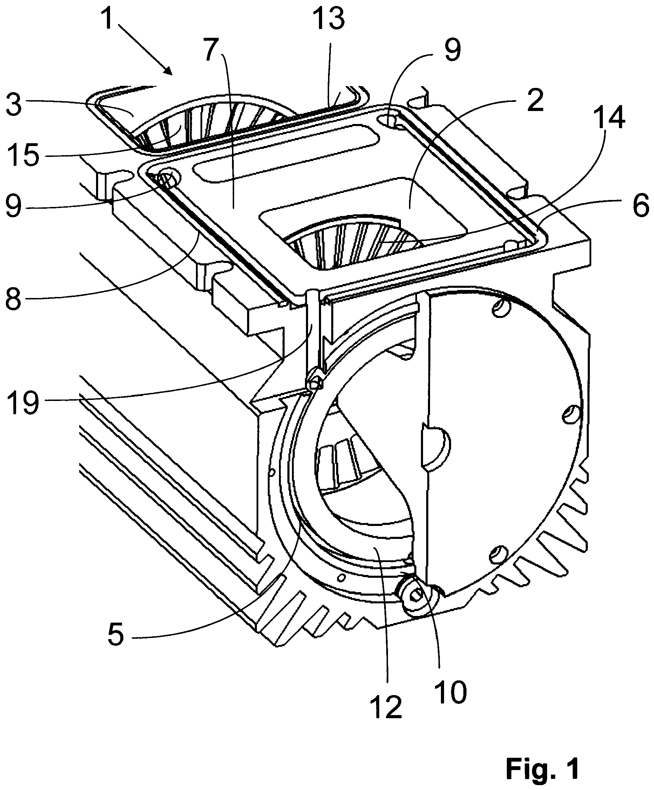

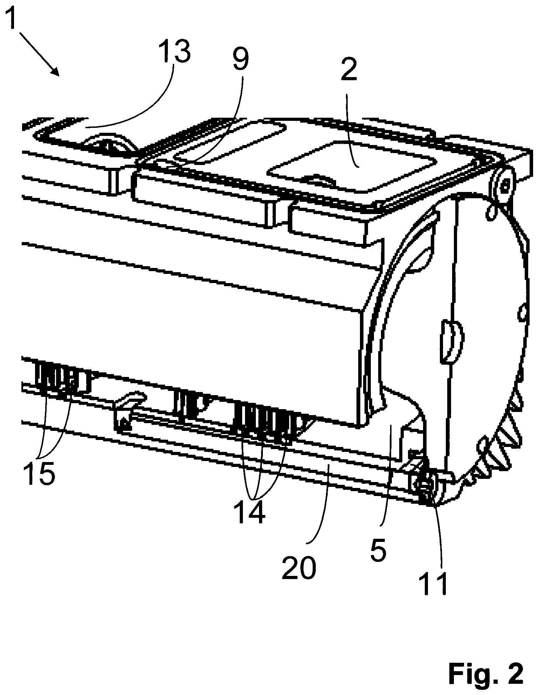

Die Fig. 1 und 2 zeigen eine Vakuumpumpe 1 mit Vakuumanschlüssen 2, 3, 4, 5 für einen Rezipienten (nicht dargestellt).

Der Vakuumanschluss 2 weist zur Atmosphärenseite hin eine Elastomerdichtung 6 auf. Zur Vakuumseite ist eine Spaltdichtung 7 vorgesehen. Da insbesondere beim Ausheizen des Rezipienten (nicht dargestellt) die Elastomerdichtung 6 ausgasen kann, ist ein Absaugkanal 8 vorgesehen, der über Absaugöffnungen 9 abgesaugt wird. Auch der Vakuumanschluss 5 weist eine Elastomerdichtung 10 sowie eine Absaugöffnung 11 auf, die am Gehäuseeinsatz 12 angeordnet ist.

Die Absaugöffnung 9 wird in eine Zwischenstufe 13 evakuiert.

In der Vakuumpumpe 1 sind rotierende Schaufelräder 14, 15, 16 angeordnet.

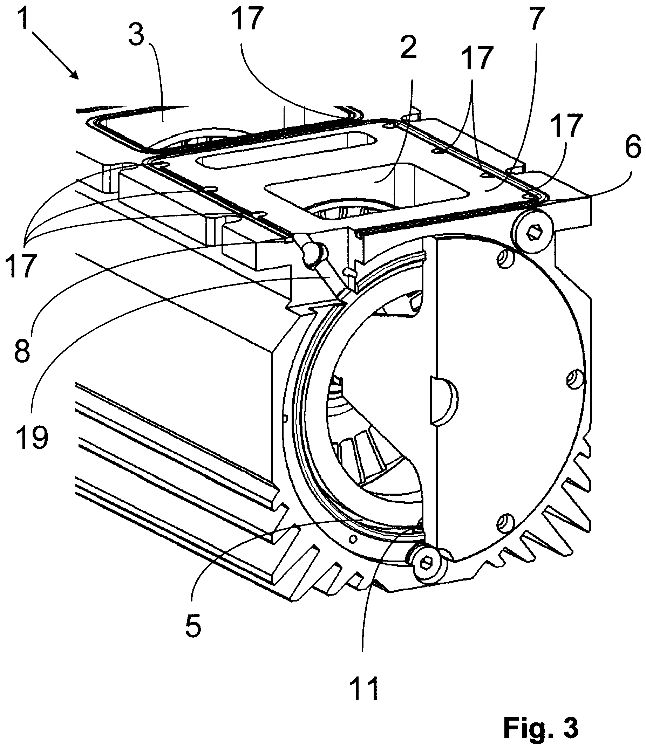

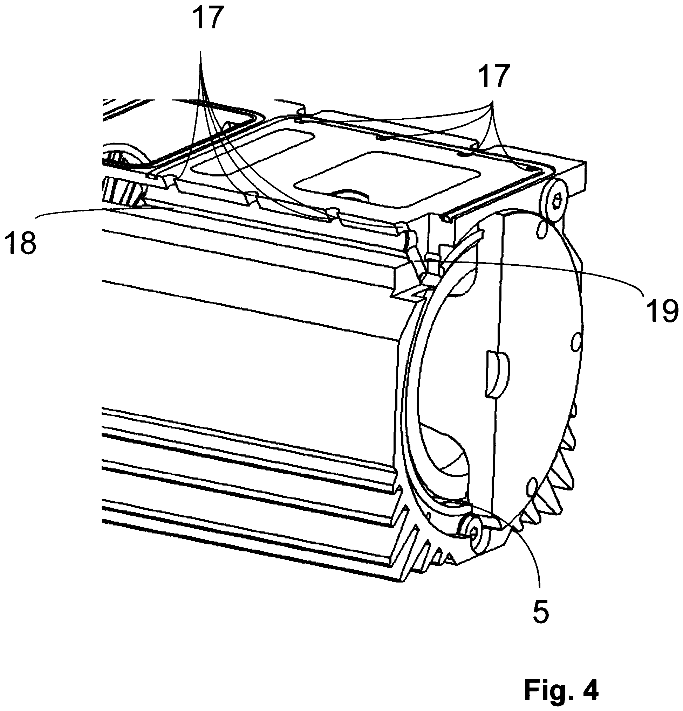

Die Fig. 3 und 4 zeigen eine Vakuumpumpe 1 mit den Vakuumanschlüssen 2, 3, 4, 5. Der Vakuumanschluss 2 weist eine Elastomerdichtung 6 sowie eine Spaltdichtung 7 auf. Zwischen der Elastomerdichtung 6 und der Spaltdichtung 7 ist ein Absaugkanal 8 angeordnet, in dem Zwischenabsaugungen 17 angeordnet sind. In dem Vakuumanschluss 5 ist wiederum eine Absaugöffnung 11 angeordnet. Wie in Fig. 4 dargestellt, führen die Zwischenabsaugungen 17 in eine Durchführungsbohrung 18, die zur Zwischenstufe 3 geführt ist. Von einer Dichtungsanordnung des Vakuumanschlusses 5 führt eine Verbindung 19 zu der Durchführungsbohrung 18, so dass der Vakuumanschluss 5 über die Absaugöffnung 11 ebenfalls über die Durchführungsbohrung 18 evakuiert wird.

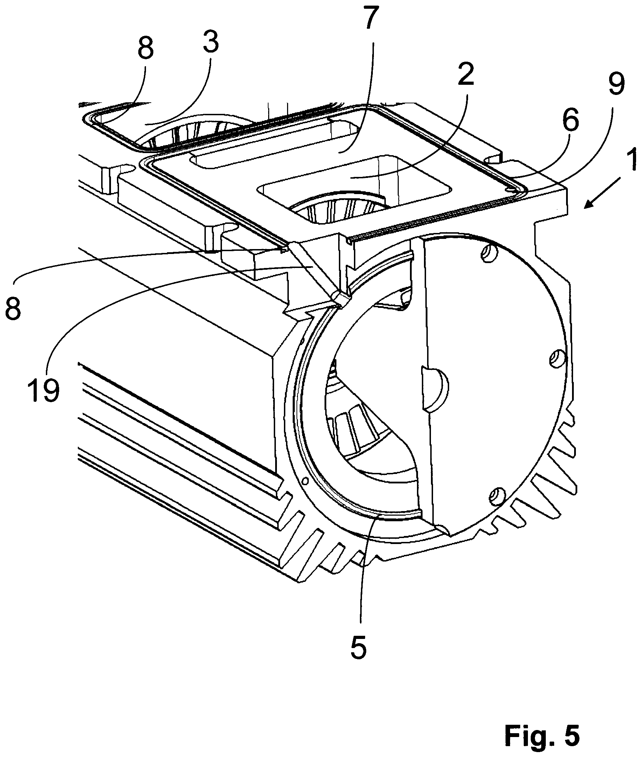

Fig. 5 zeigt ein geändertes Ausführungsbeispiel einer Vakuumpumpe 1, die einen Vakuumanschluss 2 aufweist, der zur Atmosphärenseite hin mit einer Elastomerdichtung 6 und zur Vakuumseite mit einer Spaltdichtung 7 gedichtet ist. Zwischen der Elastomerdichtung 6 und der Spaltdichtung 7 ist ein Absaugkanal 8 vorgesehen. Über Absaugöffnungen 9, die zu einer Durchführungsbohrung (nicht dargestellt) einer Dichtungsanordnung des Vakuumanschlusses 5 führen, der über eine Absaugöffnung 11 abgesaugt wird, erfolgt die Evakuierung des Absaugkanales 8.

### Bezugszahlen

- 1: Vakuumpumpe
- 2: Vakuumanschluss
- 3: Vakuumanschluss
- 4: Vakuumanschluss
- 5: Vakuumanschluss
- 6: Elastomerdichtung
- 7: Spaltdichtung
- 8: Absaugkanal
- 9: Absaugöffnung
- 10: Elastomerdichtung
- 11: Absaugöffnung
- 12: Gehäuseeinsatz
- 13: Zwischenstufe
- 14: Schaufelräder
- 15: Schaufelräder
- 16: Schaufelräder
- 17: Zwischenabsaugungen
- 18: Durchführungsbohrung
- 19: Verbindungskanal zum Sammelkanal

## Patentansprüche

1. Vakuumsystem mit wenigstens einer Vakuumpumpe (1) und wenigstens einem Rezipienten, z.B. einer Kammer, bei dem zwischen der Vakuumpumpe (1) und dem Rezipienten eine lösbare Verbindung vorgesehen ist, wobei zur Abdichtung der Verbindung zur Atmosphärenseite hin wenigstens eine Elastomerdichtung (6, 10) und in Richtung Vakuumseite wenigstens eine Spaltdichtung (7) vorgesehen sind, wobei zwischen der Elastomerdichtung (6) und der Spaltdichtung (7) wenigstens ein Absaugkanal (8) und/oder wenigstens eine Absaugöffnung (9, 11, 17) vorgesehen sind/ist, **dadurch gekennzeichnet, dass** die Spaltdichtung (7) durch Flächen des Rezipienten und eine Fläche des Pumpengehäuses (1)ausgebildet wird und die Flächen des Rezipienten und die Fläche des Pumpengehäuses aufeinandergedrückt sind.

2. Vakuumsystem nach Anspruch 1, **dadurch gekennzeichnet, dass** in dem wenigstens einen Absaugkanal (8) mehrere mit einer Durchführungsbohrung (18) in Verbindung stehende Absaugöffnungen (17) vorgesehen sind.

3. Vakuumsystem nach Anspruch 1 oder 2, **dadurch gekennzeichnet, dass** die Elastomerdichtung (6) als O-RingDichtung ausgebildet ist.

4. Vakuumsystem nach einem der vorhergehenden Ansprüche, **dadurch gekennzeichnet, dass** der Absaugkanal (8) als Freidrehung und/oder als Freifräsung ausgebildet ist.

5. Vakuumsystem nach einem der vorhergehenden Ansprüche, **dadurch gekennzeichnet, dass** der Absaugkanal (8) einen oder mehrere Ausgänge (9, 17) zum Evakuieren aufweist.

6. Vakuumsystem nach einem der vorhergehenden Ansprüche, **dadurch gekennzeichnet, dass** innerhalb der Elastomerdichtung (6) und der Spaltdichtung (7) ein oder mehrere Vakuumanschlüsse (2) des wenigstens einen Rezipienten angeordnet sind.

7. Vakuumsystem nach Anspruch 6, **dadurch gekennzeichnet, dass** die mehreren Vakuumanschlüsse (2, 3, 4, 5) auf einem unterschiedlichen Druckniveau liegen.

8. Vakuumsystem nach einem der vorhergehenden Ansprüche, **dadurch gekennzeichnet, dass** die Absaugung zwischen der Elastomerdichtung (6) und der Spaltdichtung (7) in einen Vakuumanschluss (3) innerhalb oder außerhalb der Dichtungen (6, 7) geführt ist.

9. Vakuumsystem nach einem der vorhergehenden Ansprüche, **dadurch gekennzeichnet, dass** außerhalb der Elastomerdichtung (6) und der Spaltdichtung (7) wenigstens ein weiterer Vakuumanschluss (3, 4) angeordnet ist.

10. Vakuumsystem nach einem der vorhergehenden Ansprüche, **dadurch gekennzeichnet, dass** die Vakuumanschlüsse (2, 3, 4, 5) in einer oder mehreren Ebenen angeordnet sind.

11. Vakuumsystem nach einem der vorhergehenden Ansprüche, **dadurch gekennzeichnet, dass** die Elastomerdichtung (6) und die Spaltdichtung (7) in einem Flansch, einem Anbauteil und/oder einem Einbauteil des Vakuumsystems angeordnet sind.

12. Vakuumsystem nach einem der vorhergehenden Ansprüche, **dadurch gekennzeichnet, dass** die Absaugung innerhalb oder außerhalb eines Gehäuses des Vakuumsystems angeordnet ist.

13. Vakuumsystem nach einem der vorhergehenden Ansprüche, **dadurch gekennzeichnet, dass** die Elastomerdichtung (6) und die Spaltdichtung (7) zur Abdichtung eines Ultrahochvakuumanschlusses (UHV-Port) vorgesehen sind.

14. Vakuumsystem nach Anspruch 1, **dadurch gekennzeichnet, dass** zur Absaugung des Absaugkanales (8) und/oder der Absaugöffnung (9, 11, 17) eine zusätzliche Vakuumpumpe vorgesehen ist.

15. Vakuumsystem nach Anspruch 11, **dadurch gekennzeichnet, dass** die Flansche aus Edelstahl oder Aluminium gebildet sind.

## Claims

1. Vacuum system comprising at least one vacuum pump (1) and at least one recipient, for example a chamber, in which a releasable connection is provided between the vacuum pump (1) and the recipient, wherein, in order to seal off the connection, at least one elastomer seal (6, 10) is provided towards the atmosphere side and at least one gap seal (7) is provided in the direction of the vacuum side, wherein at least one suction channel (8) and/or at least one suction opening (9, 11, 17) are/is provided between the elastomer seal (6) and the gap seal (7),
**characterised in that** the gap seal (7) is formed by surfaces of the recipient and a surface of the pump housing (1), and the surfaces of the recipient and the surface of the pump housing are pressed against one another.

2. Vacuum system according to claim 1, **characterised in that** a plurality of suction openings (17) connected to a through-bore (18) are provided in the at least one suction channel (8).

3. Vacuum system according to claim 1 or 2, **characterised in that** the elastomer seal (6) is formed as an O-ring seal.

4. Vacuum system according to any one of the preceding claims, **characterised in that** the suction channel (8) is formed as a recess and/or a relief cut.

5. Vacuum system according to any one of the preceding claims, **characterised in that** the suction channel (8) has one or more outlets (9, 17) for evacuation.

6. Vacuum system according to any one of the preceding claims, **characterised in that** one or more vacuum ports (2) of the at least one recipient are arranged within the elastomer seal (6) and the gap seal (7).

7. Vacuum system according to claim 6, **characterised in that** the plurality of vacuum ports (2, 3, 4, 5) are at a different pressure level.

8. Vacuum system according to any one of the preceding claims, **characterised in that** the suction between the elastomer seal (6) and the gap seal (7) is guided in a vacuum port (3) inside or outside the seals (6, 7).

9. Vacuum system according to any one of the preceding claims, **characterised in that** at least one further vacuum port (3, 4) is arranged outside the elastomer seal (6) and the gap seal (7).

10. Vacuum system according to any one of the preceding claims, **characterised in that** the vacuum ports (2, 3, 4, 5) are arranged in one or more levels.

11. Vacuum system according to any one of the preceding claims, **characterised in that** the elastomer seal (6) and the gap seal (7) are arranged in a flange, an attachment part and/or a built-in part of the vacuum system.

12. Vacuum system according to any one of the preceding claims, **characterised in that** the suction is arranged inside or outside a housing of the vacuum system.

13. Vacuum system according to any one of the preceding claims, **characterised in that** the elastomer seal (6) and the gap seal (7) are arranged to seal off an ultra-high vacuum port (UHV port).

14. Vacuum system according to claim 1, **characterised in that** an additional vacuum pump is provided for the suction of the suction channel (8) and/or of the suction opening (9, 11, 17).

15. Vacuum system according to claim 11, **characterised in that** the flanges are formed from stainless steel or aluminium.

## Revendications

1. Système à vide comprenant au moins une pompe à vide (1) et au moins un récipient, par exemple une chambre, dans lequel une liaison desserable est prévue entre la pompe à vide (1) et le récipient, au moins un joint élastomère (6, 10) étant prévu pour l'étanchéité de la connexion dans la direction du côté atmosphère et au moins un joint à fente (7) étant prévu dans la direction du côté vide, au moins un canal d'aspiration (8) et/ou au moins une ouverture d'aspiration (9, 11, 17) étant prévus entre le joint élastomère (6) et le joint à fente (7),
**caractérisé en ce que** le joint à fente (7) est réalisé par des surfaces du récipient et une surface du boîtier de pompe (1), et les surfaces du récipient et la surface du boîtier de pompe sont pressées les unes contre les autres.

2. Système à vide selon la revendication 1,
**caractérisé en ce que** dans l'au moins un canal d'aspiration (8) sont prévues plusieurs ouvertures d'aspiration (17) en liaison avec un alésage de passage (18).

3. Système à vide selon la revendication 1 ou 2,
**caractérisé en ce que** le joint élastomère (6) est réalisé sous forme de joint torique.

4. Système à vide selon l'une quelconque des revendications précédentes, **caractérisé en ce que** le canal d'aspiration (8) est réalisé sous forme de dégagement et/ou en tant que fraisage de dégagement.

5. Système à vide selon l'une quelconque des revendications précédentes, **caractérisé en ce que** le canal d'aspiration (8) présente une ou plusieurs sorties (9, 17) pour l'évacuation.

6. Système à vide selon l'une quelconque des revendications précédentes, **caractérisé en ce qu'**à l'intérieur du joint élastomère (6) et du joint à fente (7) sont disposés un ou plusieurs raccords à vide (2) de l'au moins un récipient.

7. Système à vide selon la revendication 6,
**caractérisé en ce que** la pluralité de raccords à vide (2, 3, 4, 5) sont situés à un niveau de pression différent.

8. Système à vide selon l'une quelconque des revendications précédentes, **caractérisé en ce que** l'aspiration entre le joint élastomère (6) et le joint à fente (7) est guidée dans un raccord à vide (3) à l'intérieur ou à l'extérieur des joints (6, 7).

9. Système à vide selon l'une quelconque des revendications précédentes, **caractérisé en ce qu'**à l'extérieur du joint élastomère (6) et du joint à fente (7) est disposé au moins un raccord à vide supplémentaire (3, 4).

10. Système à vide selon l'une quelconque des revendications précédentes, **caractérisé en ce que** les raccords à vide (2, 3, 4, 5) sont disposés dans un ou plusieurs plans.

11. Système à vide selon l'une quelconque des revendications précédentes, **caractérisé en ce que** le joint élastomère (6) et le joint à fente (7) sont disposés dans une bride, un composant rapporté et/ou un composant encastré du système à vide.

12. Système à vide selon l'une quelconque des revendications précédentes, **caractérisé en ce que** l'aspiration est disposée à l'intérieur ou à l'extérieur d'un boîtier du système à vide.

13. Système à vide selon l'une quelconque des revendications précédentes, **caractérisé en ce que** le joint élastomère (6) et le joint à fente (7) sont prévus pour réaliser l'étanchéité d'un raccord à ultra-vide (port UHV).

14. Système à vide selon la revendication 1,
**caractérisé en ce que** pour l'aspiration du canal d'aspiration (8) et/ou de l'ouverture d'aspiration (9, 11 17) est prévue une pompe à vide supplémentaire.

15. Système à vide selon la revendication 11,
**caractérisé en ce que** les brides sont formées d'acier inoxydable ou d'aluminium.
